# EUROPÄISCHE PATENTSCHRIFT

(11) **EP 2 682 037 B1**
(45) Veröffentlichungstag und Bekanntmachung des Hinweises auf die Patenterteilung: **02.03.2016**
(21) Anmeldenummer: 13401067.7
(22) Anmeldetag: 02.07.2013
(51) Int. Cl.: A47L 15/42

(54) **Geschirrspülmaschine und Verfahren zum Betreiben einer Geschirrspülmaschine**
Dishwasher and method for operating a dishwasher
Lave-vaisselle et procédé de fonctionnement d'un lave-vaisselle

(30) Priorität: 03.07.2012 DE 102012105906
(43) Veröffentlichungstag der Anmeldung: 08.01.2014
(73) Patentinhaber: Miele & Cie. KG, 33332 Gütersloh (DE)
(72) Erfinder: Bertram, Andre, 33739 Bielefeld (DE); Dahms, Tobias, 30519 Hannover (DE); Kornberger, Martin, 33739 Bielefeld (DE); Reilmann, Michael, 33611 Bielefeld (DE)

(56) Entgegenhaltungen:
- WO-A1-2009/080577
- WO-A2-01/85003
- DE-A1- 2 643 173
- DE-A1-102007 025 262
- DE-C1- 4 330 456
- GB-A- 2 115 127

## Beschreibung

Die Erfindung betrifft ein Verfahren zum Betreiben einer Geschirrspülmaschine und eine Geschirrspülmaschine gemäß den unabhängigen Ansprüchen.

Die DE 2643173A1 beschreibt eine Tunnelgeschirrspülmaschine, bei der zur Aufheizung des Spülwassers eine Wärmepumpe verwendet wird. Als Wärmequelle dient dabei der Wasch und Spülwasserdampf und die das gewaschene und nachgespülte geschirrumgebende heiße Luft. Dieses heiße aus der Geschirrspülmaschine austretende Dampf/Luftgemisch wird zum Verdampfer der Wärmepumpe geleitet, wo es seine Wärmeenergie an ein Kältemittel abgibt.

Die DE 102007025262 A1 beschreibt eine Einkammergeschirrspülmaschine mit einen mit einer Beschickungstür verschließbaren Spülraum, welche eine Wärmerückgewinnungseinrichtung und eine Dampfniederschlagseinrichtung aufweist.

Die DE 102011000042.9 beschreibt ein Verfahren zum Betreiben einer Geschirrspülmaschine, welche eine Luft- Wasser-Wärmepumpe zum Aufheizen von Spülflotte verwendet. In deren Wärmepumpenkreislauf wird Energie von einem gasförmigen Stoffstrom mit einem niedrigen Temperaturniveau auf einen flüssigen Stoffstrom mit einem höheren Temperaturniveau übertragen. Als Wärmequelle dient dabei die Raumluft am Aufstellungsort der Geschirrspülmaschine, d.h. zum Beispiel die Küchenluft. Die Wärmesenke ist die Spülflüssigkeit (Spülflotte) der Geschirrspülmaschine.

Ein Wärmepumpenkreislauf besteht im Wesentlichen aus vier Bauteilen, die strömungstechnisch über ein Rohrleitungssystem verbunden sind, in welchem ein Arbeitsmedium (Kältemittel) strömt. In Strömungsrichtung des Kältemittels sind die Bauteile so angeordnet, dass zuerst der Verdampfer (Wärmeübertrager), anschließend der Verdichter (Strömungsmaschine) und schließlich der Verflüssiger (Wärmeübertrager) durchströmt werden. Anschließend durchläuft das Kältemittel eine Drosselstelle.

Für den Betrieb des Wärmepumpenkreislaufes wird zuerst flüssiges Kältemittel in den Verdampfer eingespritzt. Aufgrund des niedrigen Druckes im Verdampfer kann das Kältemittel Energie aufnehmen und bei niedrigen Temperaturen verdampfen. Anschließend saugt der Verdichter das gasförmige Kältemittel mit niedrigem Druck an und verdichtet es auf einen hohen Druck. Dabei wird das Kältemittel heiß. Das Kältemittel beinhaltet dadurch ungefähr die Summe aus Verdampfungsenergie und Antriebsenergie des Verdichters. Diese Energie wird innerhalb des Verflüssigers wieder abgegeben. Dies geschieht durch das Kondensieren des Kältemittels. Schließlich wird das flüssige Kältemittel mittels der Drosselstelle auf einen niedrigen Druck expandiert, wo es anschließend wieder verdampfen kann, um den Wärmepumpenkreislauf ein weiteres Mal zu durchlaufen.

Damit dieser Wärmepumpenkreislauf funktioniert, muss dem Verdampfer Wärmeenergie zur Verfügung gestellt und dem Verflüssiger Wärme entzogen werden. Der Verdampfer erhält dabei wie zuvor beschrieben die notwendige Wärmeenergie zur Verdampfung des Kältemittels durch das Abkühlen von Zuluft (d.h. Raumluft), während der Verflüssiger die Wärmeenergie an Spülflotte der Geschirrspülmaschine abgibt.

Obwohl sich das im Stand der Technik bekannte Verfahren zum Betreiben einer Geschirrspülmaschine mit einem Wärmepumpenkreislauf bewährt hat, besteht weiterer Verbesserungsbedarf, insbesondere bezüglich der Energieeffizienz der Geschirrspülmaschine und dabei insbesondere in Bezug auf den Wasserverbrauch.

Es ist daher die **Aufgabe** der Erfindung, eine Geschirrspülmaschine und ein verbessertes Verfahren zum Betreiben einer Geschirrspülmaschine zur Verfügung zu stellen, wobei der Wasserverbrauch weiter reduziert wird und damit die Energieeffizienz der Geschirrspülmaschine steigt.

Zur **Lösung** dieser Aufgabe wird mit der Erfindung ein Verfahren und eine Vorrichtung gemäß den unabhängigen Ansprüchen vorgeschlagen. Weiterbildungen ergeben sich aus den Unteransprüchen.

Zum Aufheizen von Spülflotte, welche im Spülraum der Geschirrspülmaschine zum Reinigen von Spülgut eingesetzt wird, wird eine Luft-Wasser-Wärmepumpe verwendet. Diese umfasst einen Wärmepumpenkreislauf mit insbesondere einem Verdampfer, einem Verdichter und einem Verflüssiger. Dabei wird Zuluft durch einen Verdampfer geleitet, wobei die Zuluft innerhalb des Verdampfers Wärmeenergie an ein Kältemittel abgibt. Das hierbei verdampfte Kältemittel wird mittels des Verdichters komprimiert und anschließend das komprimierte Kältemittel innerhalb des Verflüssigers kondensiert. Dabei gibt es Wärmeenergie an Spülflotte ab. Durch diese Aufheizung wird die Spülflotte auf die zum Reinigen des Spülgutes vorgesehene und erfoderliche Temperatur gebracht.

Erfindungsgemäß wird dabei innerhalb des Verdampfers gebildetes Kondensat gesammelt und das gesammelte Kondensat dem Spülraum der Geschirrspülmaschine zugeleitet. Die Überführung des Kondensats in den Spülraum kann vorzugsweise dann erfolgen, wenn es benötigt wird, insbesondere erfolgt sie programmgesteuert. Die gesammelte Kondensatmenge kann dann für einen wasserführenden Programmabschnitt eines Spülprogramms verwendet werden. Auf diese Weise kann der Wasserverbrauch der Geschirrspülmaschine gesenkt werden.

Die Geschirrspülmaschine, etwa eine Haushaltgeschirrspülmaschine, weist einen mit einer Beschickungstür in an sich bekannter Weise verschließbaren Spülraum auf. Während eines Spülprogramms wird das im Spülraum befindliche Spülgut zunächst gespült und anschließend getrocknet. Das Spülen umfasst typischerweise mehrere wasserführende Programmabschnitte, etwa die Programmabschnitte REINIGEN und KLARSPÜLEN. Im Spülbetrieb, also während wasserführender Programmabschnitte ist der Spülraum durch die Beschickungstür verschlossen.

Die Zuluft wird von außerhalb der Geschirrspülmaschine in das Geschirrspülmaschinengehäuse mittels einer Fördereinrichtung angesaugt und zum Verdampfer der Wärmepumpe geleitet. Eine Einleitung der Zuluft in den Spülraum findet nicht statt. Bei der Zuluft, welche die Wärmequelle der Wärmepumpe darstellt, handelt es sich somit um Raumluft, also Luft aus dem Aufstellungsraum der Geschirrspülmaschine, etwa der Küche, die insbesondere eine für derartige Räume übliche Umgebungstemperatur aufweist, also ca. 15 bis 25°C. Die Förderung der Zuluft bzw. Raumluft erfolgt während der Heizphase eines Spülprogramms, bei der Spülflotte aufgeheizt wird, insbesondere also während eines wasserführenden Programmabschnittes. Die Förderung der Zuluft erfolgt somit insbesondere bei geschlossener Beschickungstür.

Das erfindungsgemäße Verfahren nutzt vorzugsweise das Prinzip der sogenannten nassen Kühlung. Bei der Kühlung von Gasen, insbesondere Luft, können im Wesentlichen zwei verschiedene Fälle unterschieden werden, die trockene Kühlung und die nasse Kühlung. Die trockene Kühlung bezeichnet dabei eine Kühlung ohne Wasserausscheidung, welche an einer kalten Wärmeübertragungsfläche erfolgt, die die Taupunkttemperatur der auftreffenden feuchten Luft nicht unterschreitet. Somit erfolgt bei der trockenen Kühlung kein Auskondensieren des Wasserdampfes, wodurch der absolute Wasserdampfgehalt der Luft konstant bleibt. Demgegenüber wird gemäß der Erfindung die Taupunkttemperatur der feuchten Luft unterschritten, so dass der Wasserdampf aus der Zuluft an den Verdampferoberflächen kondensiert. Der Luft wird somit das Wasser entzogen. Durch das Kondensieren der Zuluft, insbesondere des darin enthaltenen Wasserdampfes, ist ein wesentlich besserer Wärmeübergang an das Kältemittel möglich als nur aufgrund der trockenen Kühlung. Bei trockener Kühlung wären zur Erreichung des gleichen Wärmeüberganges wesentlich größere Wärmetauscherflächen notwendig bzw. eine höhere Luftmengenzufuhr. Dadurch ergäbe sich jedoch ein viel zu großer notwendiger Bauraum für den Wärmetauscher. Eine nasse Kühlung vermeidet die vorgenannten Probleme.

Damit wird bewusst ein Nachteil in Kauf genommen, welcher durch die nasse Kühlung entsteht, nämlich die Bildung von Kondensat im Verdampfer. Bisher wird die Kondensation im Hinblick auf die den Verdampfer naheliegenden elektrischen und elektronischen Komponenten stets vermieden, weil dabei besondere Vorsichtsmaßnahmen getroffen werden müssen. Die Erfindung erkennt jedoch den Vorteil der effizienteren Energieübertragung durch nasse Kühlung, welcher den Nachteil der Flüssigkeitsbildung überwiegt.

Das bei der nassen Kühlung anfallende Kondensat wird zur Verwendung in einem Programmabschnitt eines Spülprogramms der Geschirrspülmaschine genutzt. Um das Kondensat dabei besonders einfach in den Spülbehälter der Geschirrspülmaschine zu fördern, wird das gebildete Kondensat in einem Kondensatbehälter gesammelt und anschließend über eine Kondensatleitung in den Spülbehälter der Geschirrspülmaschine gegeben. Da bei einer erfindungsgemäßen Haushaltsgeschirrspülmaschine mit Luft-Wasser-Wärmepumpe, welche nach dem Prinzip der nassen Kühlung betrieben wird, die anfallende Kondensatmenge bis zu 800 ml betragen kann, wird bei der Nutzung dieser Kondensatmenge für den Spülgang die benötigte Menge Frischwasser erheblich reduziert. Dies trägt zur weiteren Resourceneinsparung der Geschirrspülmaschine bei.

Zur Sammlung des im Verdampfer anfallenden Kondensats ist im Bereich des Verdampfers, vorzugsweise unterhalb des Verdampfers ein Kondensatbehälter angeordnet, in welchen das Kondensat durch Schwerkraftwirkung gelangen kann, z.B. vom Verdampfer abtropfen kann. Das innerhalb des Kondensatbehälters gesammelte Kondensat kann anschließend dem Spülraum der Geschirrspülmaschine zugeleitet werden. Hierfür ist eine Kondensatleitung vorhanden. Die Kondensatleitung kann den Kondensatbehälter insbesondere unmittelbar oder mittelbar mit dem Spülbehälter der Geschirrspülmaschine verbinden. So kann die Kondensatleitung etwa direkt an den Spülbehälter angeschlossen sein oder auch an mit dem Spülbehälter fluidtechnisch verbundenen Bauteile, wie etwa den Sammeltopf oder der Wassereinlauftasche. Insgesamt kann das Kondensat somit gleich oder auch in einem späteren Programmabschnitt eines Spülprogramms zur Bereitstellung der für einen Programmabschnitt benötigten Wassermenge genutzt werden.

Die Erfindung sieht weiterhin vor, dass die Menge des gesammelten Kondensats gemessen wird. So kann die Menge des innerhalb des Kondensatbehälters gesammelten Kondensats etwa mittels eines in dem Kondensatbehälter angeordneten Füllstandssensors gemessen wird. Alternativ oder zusätzlich kann die Menge des innerhalb des Kondensatbehälters gesammelten Kondensats ebenfalls mittels eines in der Kondensatleitung angeordneten Durchflusssensors gemessen werden. Dadurch kann die Menge des gesammelten Kondensats zum einen bereits im Kondensatbehälter gemessen werden und zum anderen die aus dem Kondensatbehälter in den Spülbehälter überführte Menge oder Teilmenge des gesammelten Kondensats. Als Füllstandssensoren bzw. Durchflusssensoren können alle im Stand der Technik bekannten Sensoren verwendet werden. Die Mengenmessung kann insbesondere dazu genutzt werden, programmgesteuert eine Frischwassermenge zu bestimmen, die zusätzlich zum Kondensat in den Spülraum einzubringen ist, um insgesamt eine für einen Programmabschnitt eines Spülprogramms vorgegebene Spülfüssigkeitsmenge bereitzustellen.

Die Erfindung sieht weiterhin vor, dass die für einen Spülgang der Geschirrspülmaschine benötigte Menge Wasser aus Frischwasser und Kondensat gebildet wird. Dabei trägt die Erfindung dem Umstand Rechnung, dass die für einen Spülgang benötigte Wassermenge die Menge des gesammelten Kondensats typischerweise überschreitet. Somit muss zur Bereitstellung einer ausreichenden Wassermenge gleichfalls Frischwasser zugegeben werden. Dabei stehen für die Mischung von Frischwasser und Kondensat zu einer ausreichenden Wassergesamtmenge zwei unterschiedliche Verfahren zur Verfügung.

Eine erste Verfahrensvariante ist gekennzeichnet durch die Schritte Einleiten von Kondensat sowie einer vorgegebenen oder vorgebbaren Menge Frischwasser in den Spülraum, Betreiben einer die Spülflotte fördernde Umwälzpumpe mit einer Start-Drehzahl, Einleiten einer Ergänzungsmenge Frischwasser in den Spülraum und Erhöhung der Drehzahl der Umwälzpumpe.

Gemäß dieser Verfahrensvariante wird für die Durchführung eines Programmabschnitts eines Spülprogramms, wie etwa Vorspülen, Reinigen, Zwischenspülen oder Klarspülen, in einem zunächst eine vorgegebene oder vorgebbare Menge Frischwasser sowie Kondensat aus dem Kondensatbehälter in den Spülraum gegeben. Beim Kondensat handelt es sich um die gesamte im Kondensatbehälter befindliche Kondensatmenge oder um eine Teilmenge davon.

Die in den Spülraum eingeleitete vorgegebene oder vorgebbare Menge Frischwasser ist dabei insbesondere kleiner als die für die Durchführung dieses Programmabschnitts vorgesehene Spülflüssigkeitsmenge gewählt. Sie kann beispielsweise jener vorgesehenen Spülflüssigkeitsmenge abzüglich einer vorgegebenen maximalen Kondensatmenge entsprechen. Diese vorgegebene oder vorgebbare Menge Frischwasser reicht dabei insbesondere aber aus, um die Umwälzpumpe mit einer vorgegebenen, insbesondere niedrigen, Start-Drehzahl stabil, d.h. ohne Ansaugen von Luft aus dem Sammeltopf, zu betreiben. Die Start-Drehzahl ist dabei niedriger als eine für den Programmabschnitt vorgesehene Solldrehzahl. Der stabile bzw. instabile Pumpenlauf kann im Übrigen in an sich bekannter Weise über die Pumpen- bzw. Geräteelektronik sensiert werden, indem ein oder mehrere Betriebsparameter der Umwälzpumpe von der Geräteelektronik ausgewertet werden, wie in dem Patent DE 102007011307B3 beschrieben.

Die Reihenfolge der Einleitung der vorgegebenen oder vorgebbaren Menge Frischwasser einerseits und des Kondensats andererseits in den Spülraum ist grundsätzlich beliebig. Wenn zunächst die Einleitung der vorgegebenen oder vorgebbaren Menge Frischwasser erfolgt, kann allerdings schon während der Einleitung des Kondensats die Umwälzpumpe in Betrieb sein, wodurch eine kürzere Spüldauer erreichbar ist.

Mit höherer Spülflüssigkeitsmenge im Spülbehälter, kann die drehzahlregelbare Umwälzpumpe mit einer höheren Drehzahl als der Start-Drehzahl betrieben werden. Die gesammelte Kondensatmenge hängt jedoch stark von den Betriebsbedingungen und der Laufzeit der Wärmepumpe ab und ist daher nicht immer gleich groß. Somit ist nicht sichergestellt, dass die vorgesehene Spülflüssigkeitsmenge für den Programmabschnitt nach Einleitung der vorgegebene oder vorgebbare Menge Frischwasser und des Kondensats aus dem Kondensatbehälter in den Spülraum bereits erreicht ist.

Falls nach Einleitung der vorgegebene oder vorgebbare Menge Frischwasser und des Kondensats aus dem Kondensatbehälter in den Spülbehälter die Umwälzpumpe noch nicht mit ihrer, insbesondere für den Programmabschnitt des Spülprogramms, vorgegebenen Solldrehzahl stabil betrieben werden kann und/oder eine vorgegebene Spülflüssigkeitsmenge im Spülbehälter noch nicht erreicht ist, wird ein Ergänzungsschritt vorgenommen, bei dem zunächst eine Ergänzungsmenge Frischwasser in den Spülraum eingeleitet und dabei oder anschließend eine die Drehzahl der Umwälzpumpe erhöht wird.

Vorzugsweise erfolgt der Ergänzungsschritt, insbesondere das Einleiten einer Ergänzungsmenge Frischwasser in den Spülraum somit abhängig von mindestens einem Betriebsparameter der Umwälzpumpe und/oder der Menge der im Spülraum befindlichen Spülflüssigkeit.

Außerdem wird der Ergänzungsschritt, also das Einleiten einer Ergänzungsmenge Frischwasser in den Spülraum und nachfolgende und parallele Erhöhung der Drehzahl der Umwälzpumpe mehrfach wiederholt bis die Drehzahl der Umwälzpumpe eine vorgegebene oder vorgebbare Solldrehzahl und/oder die im Spülraum befindliche Spülflüssigkeitsmenge eine vorgegebene oder vorgebbare Sollmenge erreicht hat.

Mit dieser ersten Verfahrensvariante ist keine direkte Messung der Kondensatmenge, insbesondere kein Füllstandssensor im Kondensatbehälter oder Durchflussmesser in der Kondensatleitung notwendig. Man kann ohne zusätzliche Mittel den Frischwasserbedarf um die angefallene Kondensatmenge verringern.

Eine zweite Verfahrensvariante sieht vor, dass die Menge des gesammelten Kondensats gemessen wird, insbesondere kann der Kondensatbehälter hierfür einen Füllstandssensor und/oder die Kondensatleitung einen Durchflusssensor aufweisen. Dadurch ist besonders einfach eine Bestimmung der Kondensatmenge möglich. Entweder kann die Kondensatmenge dabei direkt als Füllstand innerhalb des Kondensatbehälters gemessen werden, oder die Bestimmung der Kondensatmenge erfolgt während des Durchflusses des Kondensats von dem Kondensatbehälter in den Spülraum. Vorteilhafterweise kann dann die Differenz zu der für einen Programmabschnitt eines Spülprogramms der Geschirrspülmaschine benötigten Spülflüssigkeitsmenge berechnet werden. Diese Differenz wird programmgesteuert durch Zugabe von Frischwasser ausgeglichen.

Vorzugsweise wird ein Spülprogramm aus Hygienegründen mit leerem Kondensatbehälter gestartet. Während eines ersten Programmabschnitts, beispielsweise Reinigen, wird mit der Wärmepumpe aufgeheizt. Hierbei fallen bis zu 800ml Kondensat an. Das gesammelte Kondensat wird in einem späteren Programmabschnitts, z.B. Zwischenspülen oder Klarspülen, verwendet.

In einem weiteren Aspekt wird eine Geschirrspülmaschine, insbesondere zur Ausführung des vorgenannten Verfahrens, vorgeschlagen, welche einen Spülraum zur Einbringung von zu spülendem Spülgut, und einen Wärmepumpenkreislauf umfasst, welcher einen Verdampfer, einen Verdichter und einen Verflüssiger aufweist. Zur Reduzierung der für einen Spülgang benötigten Frischwassermenge wird die Geschirrspülmaschine so variiert, dass im Bereich des Verdampfers ein Kondensatbehälter zum Sammeln von in dem Verdampfer gebildeten Kondensat angeordnet ist, und dass eine Kondensatleitung vorhanden ist, mittels der das Kondensat aus dem Kondensatbehälter dem Spülraum zuführbar ist.

Durch die in Reihe angeordneten Bauteile Verdampfer, Kondensatbehälter, Kondensatleitung und Spülraum der Geschirrspülmaschine lässt sich eine besonders einfache Abführung des Kondensats von dem Verdampfer in den Spülraum sicherstellen. Vorteilhaft ist der Kondensatbehälter dabei so angeordnet, dass das Kondensat durch Schwerkraftwirkung in den Kondensatbehälter gelangt. Der Kondensatbehälter kann etwa unter dem Verdampfer angeordnet sein, insbesondere derart dass das im Verdampfer anfallende Kondensat direkt in den Kondensatbehälter abtropft. Der Kondensatbehälter kann auch räumlich getrennt, d.h. beabstandet vom Verdampfer angeordnet sein. Insbesondere kann das Verdampfergehäuse, die Luftführung durch den Verdampfer und/oder zusätzliche Leitungen auch so ausgebildet sein, dass das Kondensat in den Kondensatbehälter durch Schwerkraftwirkung fliessen kann.

Der Verdampfer weist vorzugsweise eine Vielzahl von Lamellen, d.h. dünne Metallplatten auf, welche parallel oder annähernd parallel zueinander angeordnet ist. Die Zuluft strömt zwischen benachbarten Lamellen hindurch. Die Lamellen dienen als Kondensationsfläche für die Zuluft bzw. dem darin enthaltenen Wasserdampf.

Um eine besonders große Ausbeute an Kondensat aus den Verdampfer zu erzielen, ist es vorteilhaft, dass die Lamellen des Verdampfers hydrophil beschichtet sind. Dies stellt sicher, dass sich an den Lamellen nur ein dünner Wasserfilm bildet der ungehindert ablaufen kann.

Weiterhin sollten die Lamellen durchgängig gerade ausgebildet sein und keine Rippung aufweisen. Vorteilhaft ist zudem, wenn die Lamellen in Schwerkraftrichtung ausgerichtet sind, so dass das Ablaufen des Kondensats unterstützt wird, d.h. das Kondensat fließt senkrecht die Lamellenflächen hinab. Die plattenförmigen Lamellen weisen zumindest eine Ecke auf und sind in der Geschirrspülmaschine vorzugsweise jeweils so angeordnet, dass eine Ecke der Lamelle einen tiefstgelegenen Punkt einer Lamelle darstellt, auf den Kanten der Lamelle schräg zulaufen. Eine solche Anordnung kann einfach durch eine Neigung des kastenförmigen Verdampfers erreicht werden. Auf diese Weise kann zusätzlich der Ablauf des Kondensats aus dem Verdampfer verbessert werden. Diese speziellen Ausbildungen des Verdampfers ermöglichen insgesamt ein vereinfachtes Ablaufen des Kondensates aus dem Verdampfer in den Kondensatbehälter.

Eine weitere vorteilhafte Ausgestaltung des Verdampfers sieht eine hydrophobe Beschichtung des Verdampfers vor, welche das Kondensat in großen Tropfen ablaufen lässt.

Weitere Merkmale und Vorteile der Erfindung sind im Folgenden anhand der Figuren näher beschrieben. Dabei zeigen:
- Fig. 1: einen schematischen Aufbau eines Wärmepumpenkreislaufes;
- Fig. 2: den Wärmepumpenkreislauf gemäß Fig. 1, eingebaut in eine Geschirrspülmaschine;
- Fig. 3: eine Seitenansicht der Geschirrspülmaschine gemäß Fig. 2;
- Fig. 4: schematisch einen Querschnitt durch eine Geschirrspülmaschine.

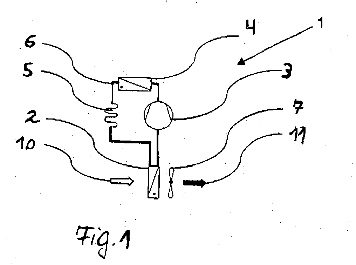

Fig. 1 zeigt einen schematischen Aufbau eines Wärmepumpenkreislaufes 1 mit einem Verdampfer 2, einem Verdichter 3, einem Verflüssiger 4, einer Drosselstelle 5 und einem diese verbindenden Strömungskreislauf 6. Des Weiteren befindet sich in Strömungsrichtung hinter dem Verdampfer 2 ein Ventilator 7.

Der Wärmepumpenkreislauf 1 funktioniert so, dass der Ventilator 7 Zuluft 10 (d.h. Raumluft) durch den Verdampfer 2 hindurch saugt. Hierdurch wird die Zuluft 10 im Verdampfer 2 abgekühlt. Um die erfindungsgemäße nasse Kühlung zu gewährleisten, befindet sich die Oberflächentemperatur des Verdampfers 2 unter der Taupunkttemperatur der Zuluft 10. Bei Zuluft 10 mit einer Temperatur von 20°C und 50% r.F. beträgt die Taupunkttemperatur bei 1013 hPa in etwa 9,3°C. Sofern die Oberflächentemperatur des Verdampfers 2 geringer als diese 9,3°C ist, kondensiert der in der Zuluft 10 enthaltene Wasserdampf innerhalb des Verdampfers 2. Damit eine ausreichende Heizleistung des Wärmepumpenkreislaufes 1 sichergestellt ist, muss eine ausreichende Menge Zuluft 10 durch den Verdampfer 2 strömen. Hierzu empfiehlt sich die Verwendung eines Ventilators 7, welcher in Strömungsrichtung hinter dem Verdampfer 2 angeordnet ist. Hierzu ist beispielsweise ein Luftvolumenstrom von 100 m³/h geeignet. Bei einem Luftvolumenstrom von 100m³/h, der um eine Temperaturdifferenz von 10 K durch den Verdampfer 2 abgekühlt wird, werden bereits im Falle einer trockenen Kühlung ca. 330 W Kühlleistung erzeugt. Dies reicht aus, um eine haushaltsübliche Geschirrspülmaschine 8 in akzeptabler Zeitspanne mittels des Wärmepumpenkreislaufes 1 aufzuheizen. Bei nasser Kühlung erhöht sich die Kühlleistung je nach Zuluftfeuchte entsprechend. Die Heizleistung des Wärmepumpenkreislaufes 1 setzt sich dann näherungsweise aus der tatsächlichen Kühlleistung des Verdampfers 2 und der Antriebsleistung des nachfolgenden Verdichters 3 zusammen. Dabei ergeben sich je nach Antriebsleistung des Verdichters und Wirkungsgrad der Anlage Heizleistungen zwischen 130 W und 2000 W.

Die abgekühlte Zuluft 10 wird nach dem Verdampfer 2 über den Ventilator 7 als Abluft 11 weggeleitet. Dafür ist ein entsprechender Luftkanal 9 vorgesehen.

Das im Verdampfer 2 gebildete Kondensat 13 der Zuluft 10 wird in einem Kondensatbehälter 12 gesammelt und in einen Spülbehälter der Geschirrspülmaschine 8 gegeben. Das Kondensat 13 wird dabei so lange gesammelt, bis sich die Geschirrspülmaschine 8 kurz vor einem neuen Spülgang befindet und sodann in den Spülbehälter eingelassen. Hierdurch kann die Flüssigkeitsmenge des Kondensats 13 für den folgenden Spülgang genutzt werden.

Durch die von der Zuluft 10 auf das Kältemittel übergeleitete Wärmeenergie, kann das Kältemittel verdampfen. Der Verdichter 3 saugt anschließend das gasförmige Kältemittel mit niedrigem Druck an und verdichtet es auf einen hohen Druck. Dabei wird das Kältemittel erhitzt, wobei es annähernd die Summe aus Verdampfungsenergie und Antriebsenergie des Verdichters 3 beinhaltet. Diese Gesamtenergie wird am Verflüssiger 4 wieder abgegeben. Dies geschieht über die Kondensation des Kältemittels innerhalb des Verflüssigers 4. Das flüssige Kältemittel wird anschließend über die Drosselstelle 5 auf einen niedrigen Druck expandiert, wo es anschließend wieder verdampfen kann.

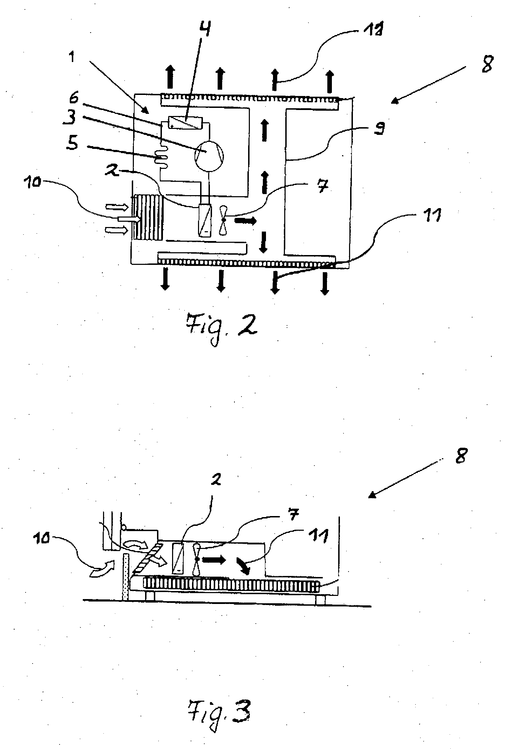

Fig. 2 zeigt den Wärmepumpenkreislauf 1 gemäß Fig. 1, welcher in einer Geschirrspülmaschine 8 eingebaut ist. Hier ist zusätzlich der Luftkanal 9 dargestellt, in welchem der Verdampfer 2 angeordnet ist.

Fig. 3 zeigt den Bodenbereich der Geschirrspülmaschine 8 gemäß Fig. 2.

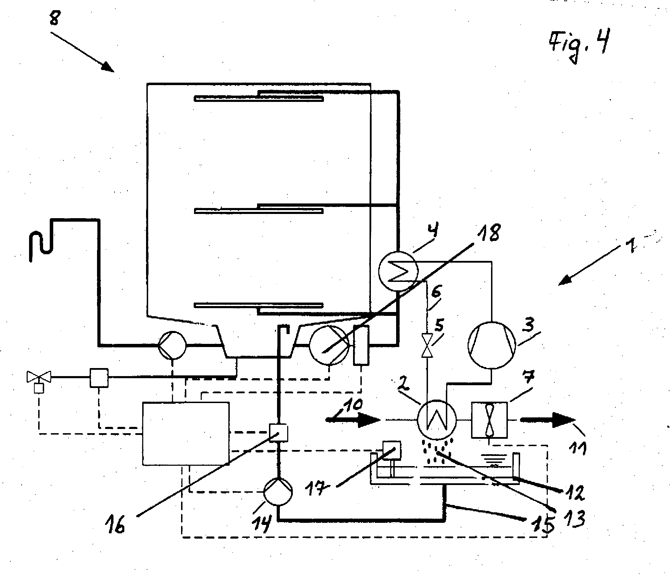

Fig. 4 zeigt schematisch einen Querschnitt durch eine Geschirrspülmaschine 8. Die Geschirrspülmaschine 8 verfügt über einen Wärmepumpenkreislauf 1 mit einem Verdampfer 2, einem Verdichter 3, einem Verflüssiger 4, einer Drosselstelle 5, einem Strömungskreislauf 6 und einem Ventilator 7. Zum Sammeln des am Verdampfer 2 entstehenden Kondensats 13 ist unterhalb des Verdampfers 2 ein Kondensatbehälter 12 angeordnet. Mittels einer Kondensatpumpe 14 wird das Kondensat 13 aus dem Kondensatbehälter 12 abgesaugt und durch eine Kondensatleitung 15 in den Spülbehälter der Geschirrspülmaschine 8 gegeben. Zur Messung der Menge des Kondensats 13 innerhalb des Kondensatbehälters 12 dient ein Füllstandssensor 17. Ein Durchflusssensor 16 innerhalb der Kondensatleitung 15 misst den Durchfluss von dem Kondensatbehälter 12 in den Spülraum der Geschirrspülmaschine 8.

Bei der vorgeschlagenen Lösung gemäß Fig. 4 wird das Kondensat 13 innerhalb des Kondensatbehälters 12 gesammelt. Die Kondensatpumpe 14 fördert das Kondensat 13 über eine Kondensatleitung 15 aus dem Kondensatbehälter 12 in den Spülraum der Geschirrspülmaschine 8. Mittels der Geräteelektronik kann die Kondensatpumpe 14 angesteuert werden. Durch diese Ausgestaltung kann die Geschirrspülmaschine 8 die Wassereinläufe bei Bedarf mit Kondensat 13 ergänzen, wodurch sich der Frischwasserverbrauch der Geschirrspülmaschine 8 insgesamt verringert.

Für die Bereitstellung der während eines Spülprogramms benötigten Wassermenge ergeben sich zwei mögliche Verfahrensabläufe.

In einer ersten erfindungsgemäßen Ausgestaltung wird eine definierte Menge Frischwasser, beispielsweise zwei Liter, in den Sammeltopf der Geschirrspülmaschine 8 gegeben. Vorteilhafterweise wird für diese Teilmenge die für diesen Spülgang vorgesehenen Wassermenge abzüglich der maximal möglichen Kondensatmenge verwendet. Anschließend wird die Umwälzpumpe 18 mit niedriger Drehzahl, beispielsweise 2500 Umdrehung/min gestartet, wodurch ein stabiler Pumpenlauf sichergestellt wird. Anschließend wird das Kondensat 13 (oder eine Teilmenge Kondensat 13) in den Sammeltopf der Geschirrspülmaschine 8 gegeben, wobei gleichzeitig die Drehzahl der Umwälzpumpe 18 bis zum Erreichen der Solldrehzahl bei stabilem Pumpenlauf erhöht wird. Die betreffende Drehzahl kann beispielsweise 3750 Umdrehung/min betragen. Reicht die Kondensatmenge nicht aus, kann die Drehzahl der Umwälzpumpe 18 nicht auf die Solldrehzahl für stabilen Pumpenlauf eingestellt werden. Dabei müssen zur Erreichung der Solldrehzahl zusätzlich ein oder mehrere weitere Teilwassereinläufe mit Frischwasser oder Kondensat 13 erfolgen, bis ein stabiler Pumpenlauf bei Solldrehzahl der Umwälzpumpe 18 erreicht ist.

Ein zweiter Verfahrensablauf sieht die Verwendung des Durchflusssensors 16 innerhalb der Kondensatleitung 15 vor. Nach diesem Verfahren wird das gesamte im Kondensatbehälter 12 vorhandene Kondensat 13 in den Spülbehälter gegeben und die entsprechende Menge mittels des Durchflusssensors 16 gemessen. Anschließend wird der Differenzwert zwischen der Istwassermenge des Kondensats 13 und einer Sollmenge gebildet. Die fehlende Wassermenge wird durch Frischwasser ausgeglichen und in den Spülbehälter der Geschirrspülmaschine 8 gegeben.

Weiterhin kann innerhalb des Kondensatbehälters 12 ein Füllstandssensor 17 angeordnet sein, welcher die zur Verfügung stehende Kondensatmenge bereits innerhalb des Kondensatbehälters 12 misst.

Bei unvorhergesehenen starken Kondensatanfall, kann des Weiteren mittels des Füllstandssensor 17 ein drohender Überlauf des Kondensatbehälters 12 sensiert werden. Dieser kann dann durch Einschalten der Kondensatpumpe verhindert werden.

Weiterhin kann die Kondensatleitung 15 ausgehend vom Kondensatbehälter 12 entweder direkt in den Spülbehälter der Geschirrspülmaschine 8 geführt werden oder in andere mit dem Spülbehälter fluidtechnisch verbundene Bauteile der Geschirrspülmaschine 8, etwa in einen Sammeltopf, welcher sich in Strömungsrichtung vor dem Spülbehälter befindet, oder in eine Wassereinlauftasche.

Die Kondensatpumpe 14 kann eine Membran-, Vibrations-, Kreisel- oder Hubkolbenpumpe sein.

### Bezugszeichen

- 2: 1 Wärmepumpenkreislauf Verdampfer
- 3: Verdichter
- 4: Verflüssiger
- 5: Drosselstelle
- 6: Strömungskreislauf
- 7: Ventilator
- 8: Geschirrspülmaschine
- 9: Luftkanal
- 10: Zuluft
- 11: Abluft
- 12: Kondensatbehälter
- 13: Kondensat
- 14: Kondensatpumpe
- 15: Kondensatleitung
- 16: Durchflusssensor
- 17: Füllstandssensor
- 18: Umwälzpumpe

## Patentansprüche

1. Verfahren zum Betreiben einer Geschirrspülmaschine (8), wobei Zuluft (10) innerhalb des Verdampfers (2) Wärmeenergie an ein Kältemittel abgibt, wobei anschließend das verdampfte Kältemittel mittels eines Verdichters (3) komprimiert wird, und wobei anschließend das komprimierte Kältemittel innerhalb eines Verflüssigers (4) kondensiert wird und Wärmeenergie an Spülflotte abgibt,
und wobei innerhalb des Verdampfers (2) gebildetes Kondensat (13) gesammelt wird,
**dadurch gekennzeichnet,**
dass), die Geschirrspülmaschine (8) einen mit einer Beschickungstür verschließbaren Spülraum aufweist, wobei die Zuluft (10) bei geschlossener Beschickungstür von außerhalb der Geschirrspülmaschine (8) in das Geschirrspülmaschinengehäuse mittels einer Fördereinrichtung während eines wasserführenden Programmabschnitts angesaugt und durch den Verdampfer (2) geleitet wird,
und dass das gesammelte Kondensat (13) dem Spülraum der Geschirrspülmaschine (8) zugeleitet wird.

2. Verfahren nach Anspruch 1,
**dadurch gekennzeichnet,**
**dass** die Menge des gesammelten Kondensats (13) und/oder die Menge des dem Spülraum der Geschirrspülmaschine (8) zugeleiteten Kondensats gemessen wird.

3. Verfahren nach einem der Ansprüche 1 bis 2,
**dadurch gekennzeichnet,**
**dass** die für einen Programmabschnitt eines Spülprogramms benötigte Spülflüssigkeitsmenge aus Frischwasser und Kondensat (13) gebildet wird.

4. Verfahren nach einem der Ansprüche 1 bis 3,
**gekennzeichnet durch** die Schritte,
- Einleiten von Kondensat (13) sowie einer vorgegebenen oder vorgebbaren Menge Frischwasser in den Spülraum
- Betreiben einer die Spülflotte fördernde Umwälzpumpe (18) mit einer Start-Drehzahl
- Einleiten einer Ergänzungsmenge Frischwasser in den Spülraum
- Erhöhung der Drehzahl der Umwälzpumpe (18).

5. Verfahren nach Anspruch 4,
**dadurch gekennzeichnet,**
**dass** das Einleiten einer Ergänzungsmenge Frischwasser in den Spülraum abhängig von mindestens einem Betriebsparameter der Umwälzpumpe (18) und/oder der Menge der im Spülraum befindlichen Spülflüssigkeit erfolgt.

6. Verfahren nach einem der Ansprüche 4 bis 5,
**dadurch gekennzeichnet,**
**dass** die Schritte Einleiten einer Ergänzungsmenge Frischwasser in den Spülraum und Erhöhung der Drehzahl der Umwälzpumpe (18) mehrfach wiederholt werden bis die Drehzahl der Umwälzpumpe (18) eine vorgegebene oder vorgebbare Solldrehzahl und/oder die im Spülraum befindliche Spülflüssigkeitsmenge eine vorgegebene oder vorgebbare Sollmenge erreicht hat.

7. Verfahren nach einem der vorgehenden Ansprüche,
**dadurch gekennzeichnet,**
**dass** die innerhalb des Kondensatbehälters (12) gesammelte Menge Kondensat (13) in den Spülraum der Geschirrspülmaschine (8) gegeben wird, dass anschließend die Differenz zu der für einen Programmabschnitt eines Spülprogramms der Geschirrspülmaschine (8) vorgesehene Spülflüssigkeitsmenge berechnet wird, und dass diese Differenz durch Zugabe einer Ergänzungsmenge Frischwasser ausgeglichen wird.

8. Geschirrspülmaschine (8) mit einem Spülraum zur Einbringung von zu spülendem Spülgut, und mit einem Wärmepumpenkreislauf (1) zum Aufheizen der Spülflotte, welcher einen Verdampfer (2), einen Verdichter (3) und einen Verflüssiger (4) aufweist,
wobei im Bereich des Verdampfers (2) ein Kondensatbehälter (12) zum Sammeln von in dem Verdampfer (2) gebildeten Kondensat (13) angeordnet ist,
**dadurch gekennzeichnet,**
**dass** die Geschirrspülmaschine (8) einen mit einer Beschickungstür verschließbaren Spülraum aufweist sowie eine Fördereinrichtung, mit der Zuluft (10) bei geschlossener Beschickungstür von außerhalb der Geschirrspülmaschine (8) in das Geschirrspülmaschinengehäuse während eines wasserführenden Programmabschnitts angesaugt und durch den Verdampfer (2) geleitet werden kann, und dass eine Kondensatleitung (15) vorhanden ist, mittels der das im Kondensatbehälter (12) gesammelte Kondensat (13) dem Spülraum zuführbar ist.

9. Geschirrspülmaschine (8) nach Anspruch 8,
**dadurch gekennzeichnet,**
**dass** der Kondensatbehälter (12) einen Füllstandssensor (17) aufweist und/oder dass die Kondensatleitung (15) einen Durchflusssensor (16) aufweist.

10. Geschirrspülmaschine (8) nach einem der Ansprüche 8 bis 9,
**dadurch gekennzeichnet,**
**dass** der Verdampfer (2) eine Vielzahl von als Kondensationsfläche wirkende Lamellen aufweist.

11. Geschirrspülmaschine (8) nach einem der Ansprüche 8 bis 10,
**dadurch gekennzeichnet,**
**dass** der Verdampfer (2) eine hydrophile Beschichtung oder eine hydrophobe Beschichtung aufweist.

## Claims

1. Method for operating a dishwasher (8), supply air (10) delivering heat energy to a cooling agent inside the evaporator (2), the evaporated cooling agent then being compressed by means of a compressor (3), and the compressed cooling agent then being condensed inside a condenser (4) and delivering heat energy to a rinsing solution, and condensate (13) produced inside the evaporator (2) being collected,
**characterised in that**
the dishwasher (8) comprises a washing chamber that can be closed by a loading door, the supply air (10), when the loading door is closed, being sucked from outside the dishwasher (8) into the dishwasher housing by means of a conveying device during a water-conducting program phase and being conducted by means of the evaporator (2),
and **in that** the collected condensate (13) is conveyed to the washing chamber of the dishwasher (8).

2. Method according to claim 1,
**characterised in that**
the amount of collected condensate (13) and/or the amount of condensate that is conveyed to the washing chamber of the dishwasher (8) is measured.

3. Method according to any of claims 1 to 2,
**characterised in that**
the amount of rinsing fluid required for a program phase of a washing program comprises fresh water and condensate (13).

4. Method according to any of claims 1 to 3,
**characterised by** the steps of:
- introducing condensate (13) and a predetermined or predeterminable amount of fresh water into the washing chamber
- operating a circulating pump (18), which delivers the rinsing solution, at a starting speed
- introducing an additional amount of fresh water into the washing chamber
- increasing the speed of the circulation pump (18).

5. Method according to claim 4,
**characterised in that**
the introduction of an additional amount of fresh water into the washing chamber is dependent on at least one operating parameter of the circulating pump (18) and/or on the amount of rinsing solution in the washing chamber.

6. Method according to any of claims 4 to 5,
**characterised in that**
the steps of introducing an additional amount of fresh water into the washing chamber and of increasing the speed of the circulating pump (18) is repeated many times until the speed of the circulating pump (18) has reached a predetermined or predeterminable target speed and/or until the amount of rinsing fluid in the washing chamber has reached a predetermined or predeterminable target amount.

7. Method according to any of the claims,
**characterised in that**
the amount of condensate (13) collected inside the condensate container (12) is supplied to the washing chamber of the dishwasher (8), **in that** the difference in the amount of rinsing solution provided for a program phase of a washing program of the dishwasher (8) is then calculated, and **in that** this difference is balanced out by adding an additional amount of fresh water.

8. Dishwasher (8) comprising a washing chamber for loading washware to be washed and a heat pump circuit (1) for heating the rinsing solution, which circuit comprises an evaporator (2), a compressor (3) and a condenser (4),
a condensate container (12) being arranged in the region of the evaporator (2) for collecting condensate (13) produced in the evaporator (2),
**characterised in that**
the dishwasher (8) comprises a washing chamber that can be closed by a loading door, and a conveying device, by means of which, when the loading door is closed, supply air (10) can be sucked from outside the dishwasher (8) into the dishwasher housing during a water-conducting program phase and can be conducted by means of the evaporator (2), and **in that** a condensate line (15) is provided, via which the condensate (13) collected in the condensate container (12) can be fed to the washing chamber.

9. Dishwasher (8) according to claim 8,
**characterised in that**
the condensate container (12) comprises a level sensor (17) and/or **in that** the condensate line (15) comprises a flow sensor (16).

10. Dishwasher (8) according to any of claims 8 to 9,
**characterised in that**
the evaporator (2) comprises a plurality of slats which act as condensation surfaces.

11. Dishwasher (8) according to any of claims 8 to 10,
**characterised in that**
the evaporator (2) comprises a hydrophilic coating or a hydrophobic coating.

## Revendications

1. Procédé de fonctionnement d'un lave-vaisselle (8), dans lequel de l'air amené (10) délivre, à l'intérieur de l'évaporateur (2), de l'énergie thermique à un réfrigérant, dans lequel ensuite le réfrigérant évaporé est comprimé au moyen d'un compresseur (3), dans lequel ensuite le réfrigérant comprimé est condensé à l'intérieur d'un condenseur (4) et délivre de l'énergie thermique au bain de lavage, et dans lequel du condensat (13) formé à l'intérieur de l'évaporateur (2) est collecté,
**caractérisé en ce que**
le lave-vaisselle (8) présente un espace de lavage pouvant être fermé avec une porte de chargement, dans lequel l'air amené (10), quand la porte de chargement est fermée, est aspiré à partir de l'extérieur du lave-vaisselle (8) dans le carter du lave-vaisselle au moyen d'un dispositif de transport pendant un segment de programme véhiculant de l'eau et conduit à travers l'évaporateur (2),
et **en ce que** le condensat (13) collecté est conduit à l'espace de lavage du lave-vaisselle (8).

2. Procédé selon la revendication 1,
**caractérisé en ce que**
la quantité du condensat (13) collecté et/ou la quantité du condensat conduit à l'espace de lavage du lave-vaisselle (8) est mesurée.

3. Procédé selon l'une des revendications 1 à 2,
**caractérisé en ce que**
la quantité de liquide de lavage nécessaire pour un segment de programme d'un programme de lavage est formée d'eau fraîche et de condensat (13).

4. Procédé selon l'une des revendications 1 à 3,
**caractérisé par** les étapes suivantes :
- introduction de condensat (13) ainsi que d'une quantité prédéfinie ou pouvant être prédéfinie d'eau fraîche dans l'espace de lavage
- fonctionnement d'une pompe de recirculation (18), faisant circuler le bain de lavage, avec une vitesse de rotation de démarrage
- introduction d'une quantité d'appoint d'eau fraîche dans l'espace de lavage
- augmentation de la vitesse de rotation de la pompe de recirculation (18).

5. Procédé selon la revendication 4,
**caractérisé en ce que**
l'introduction d'une quantité d'appoint d'eau fraîche dans l'espace de lavage s'effectue en fonction d'au moins un paramètre de fonctionnement de la pompe de recirculation (18) et/ou de la quantité du liquide de lavage présent dans l'espace de lavage.

6. Procédé selon l'une des revendications 4 à 5,
**caractérisé en ce que**
les étapes d'introduction d'une quantité d'appoint d'eau fraîche dans l'espace de lavage et d'augmentation de la vitesse de rotation de la pompe de recirculation (18) sont répétées plusieurs fois jusqu'à ce que la vitesse de rotation de la pompe de recirculation (18) ait atteint une vitesse de rotation de consigne prédéfinie ou pouvant être prédéfinie et/ou jusqu'à ce que la quantité de liquide de lavage présente dans l'espace de lavage ait atteint une quantité de consigne prédéfinie ou pouvant être prédéfinie.

7. Procédé selon l'une des revendications précédentes,
**caractérisé en ce que**
la quantité de condensat (13) collectée à l'intérieur du réservoir de condensat (12) est délivrée dans l'espace de lavage du lave-vaisselle (8), **en ce que** ensuite la différence avec la quantité de liquide de lavage prévue pour un segment de programme d'un programme de lavage du lave-vaisselle (8) est calculée, et **en ce que** cette différence est compensée par l'addition d'une quantité d'appoint d'eau fraîche.

8. Lave-vaisselle (8) avec un espace de lavage pour l'entrée des articles à laver, et avec un circuit de pompe à chaleur (1) pour le chauffage du bain de lavage qui présente un évaporateur (2), un compresseur (3) et un condenseur (4),
dans lequel, dans la zone de l'évaporateur (2), il est disposé un réservoir de condensat (12) pour la collecte du condensat (13) formé dans l'évaporateur (2),
**caractérisé en ce que**
le lave-vaisselle (8) présente un espace de lavage pouvant être fermée avec une porte de chargement ainsi qu'un dispositif de transport avec lequel de l'air amené (10), quand la porte de chargement est fermée, peut être aspiré à partir de l'extérieur du lave-vaisselle (8) dans le carter du lave-vaisselle pendant un segment de programme véhiculant de l'eau et conduit à travers l'évaporateur (2),
et **en ce qu'**il existe une conduite de condensat (15) au moyen de laquelle le condensat (13) collecté dans le réservoir de condensat (12) peut être conduit à l'espace de lavage.

9. Lave-vaisselle (8) selon la revendication 8,
**caractérisé en ce que**
le réservoir de condensat (12) présente un capteur de niveau de remplissage (17) et/ou **en ce que** la conduite de condensat (15) présente un capteur de débit (16).

10. Lave-vaisselle (8) selon l'une des revendications 8 à 9,
**caractérisé en ce que**
l'évaporateur (2) présente une multiplicité de lamelles agissant en tant que surface de condensation.

11. Lave-vaisselle (8) selon l'une des revendications 8 à 10,
**caractérisé en ce que**
l'évaporateur (2) présente un revêtement hydrophile ou un revêtement hydrophobe.
